# EUROPEAN PATENT APPLICATION

(11) **EP 2 573 700 A1**
(43) Date of publication of application: **27.03.2013**
(21) Application number: 12180638.4
(22) Date of filing: 16.08.2012
(51) Int. Cl.: G06F 21/41

(54) **Communication with cloud server in image forming apparatus**

(30) Priority: 23.09.2011 KR 20110096490
(71) Applicant: Samsung Electronics Co., Ltd., Suwon-si, Gyeonggi-do, 443-742 (KR)
(72) Inventor: Park, Sang-hyun, Suwon-si (KR)
(74) Representative: Waddington, Richard

(57) **Abstract**

An image forming apparatus, a method of communicating with a cloud server in the image forming apparatus, and a computer-readable recording medium are provided. The image forming apparatus includes: a user interface unit which, if a menu related to an access to the cloud server is selected, displays an account information user interface (UI) window to input account information; a storage unit which stores cloud clients; a controller which automatically selects a cloud client corresponding to the input account information from the cloud clients stored in the storage unit and detects cloud server information corresponding to the selected cloud client from the selected cloud client; and a communication interface unit which transmits the account information to the cloud server by using the cloud server information to log in the cloud server and communicates with the logged-in cloud server.

## Description

### BACKGROUND

### 1. Field

Apparatuses consistent with embodiments relate to an image forming apparatus, a method of communicating with a cloud server in the image forming apparatus, and a computer-readable recording medium, and more particularly, to an image forming apparatus which directly transmits and receives data with a cloud server, and a method of communicating with the cloud server in the image forming apparatus, and a computer-readable recording medium.

### 2. Description of the Related Art

An image forming apparatus refers to an apparatus which prints data generated by a terminal apparatus such as a computer on a recording paper. Examples of the image forming apparatus include a copier, a printer, a fax machine, and a multifunction peripheral (MFP) which may perform functions of copying, faxing and printing through one device, etc.

A cloud refers to a computing service by which a user borrows enough computing resources, such as intangible hardware, software, etc., and pays for that.

With the development of information technology (IT), information is permanently stored in a cloud server on the Internet, and data of users' servers is read, revised, and deleted through a user terminal apparatus such as a desktop computer, a tablet computer, a notebook computer, a net book, a smart phone, or the like.

If data is stored in a storage unit of a user terminal apparatus or an image forming apparatus, the data may be lost due to a defect of the user terminal apparatus or the image forming apparatus. Therefore, a user demands a prevention of data loss and a solution to a space limitation problem caused by an increase of an amount of data. As a result, the storage unit is to be extended, thereby increasing maintenance and repair costs. Due to this, the use of a cloud service has increased. The Internet portal site, such as Google, Daum, or Naver, has extensively provided a cloud service in consideration of the above-described trend.

In order to upload data generated by an image forming apparatus to a cloud server, the generated data is transmitted to a user terminal apparatus such as a personal computer (PC), and then the user terminal apparatus accesses the cloud server to upload the generated data to the cloud server. In other words, the user terminal apparatus is necessarily used in order to upload the data generated by the image forming apparatus to the cloud server. Therefore, it takes much time to upload the data to the cloud server, and the data is to be transmitted.

Also, as a cloud service is activated, various companies provide cloud services. Therefore, cloud service web sites or cloud-related applications of companies have increased. Accordingly, a user has an inconvenience of searching for and executing a cloud service that the user wants to use.

### SUMMARY

Additional aspects and/or advantages will be set forth in part in the description which follows and, in part, will be apparent from the description, or may be learned by practice.

One or more embodiments may overcome the above disadvantages and other disadvantages not described above. However, it is understood that one or more embodiment are not required to overcome the disadvantages described above, and may not overcome any of the problems described above.

One or more embodiments provide a technology aiming to directly upload the data generated by an image forming apparatus to a cloud server without transmitting the data to a user terminal apparatus. Also, one or more embodiments provide another technology integrating various cloud clients into one cloud service.

According to the present invention there is provided an apparatus and method as set forth in the appended claims. Other features of the invention will be apparent from the dependent claims, and the description which follows.

According to an aspect of an embodiment, there is provided a method of communicating with a cloud server in an image forming apparatus. The method may include: if a menu related to an access to the cloud server is selected, displaying an account information user interface (UI) window; inputting account information through the account information UI window; automatically selecting a cloud client corresponding to the input account information from pre-stored cloud clients; transmitting the account information to the cloud server by using cloud server information corresponding to the selected cloud client to log in the cloud server; and communicating with the logged-in cloud server.

The account information may include a user identification (ID) and server identification information. The cloud client may be automatically selected according to the server identification information.

The method may further include: if the login is performed with respect to the cloud server, requesting information about a free space available for a user in the cloud server, wherein the free space corresponds to the account information; and displaying the information about the free space according to the request.

The method may further include: uploading scanned data or stored data to the cloud server according to a type of the selected menu.

The upload of the scanned data or the stored data may include: comparing a file size of the scanned data or the stored data with the free space; and if the free space is greater than the file size of the scanned data or the stored data, uploading the scanned data or the stored data to the cloud server.

The method may further include: if the scanned data or the stored data is uploaded to the cloud server, requesting information about a free space available in the cloud server remaining after the scanned data or the stored data is uploaded to the cloud server; and if the information about the remaining free space available in the cloud server is received according to the request, displaying the information about the remaining free space available in the cloud server.

The method may further include: if the free space is smaller than the file size of the scanned data or the stored data or the free space is not enough when the scanned data or the stored data is being uploaded to the cloud server, logging out.

The method may further include: if the free space is smaller than the file size of the scanned data or the stored data or the free space is not enough when the scanned data or the stored data is being uploaded to the cloud server, displaying an email transmission menu which is to transmit data, which is to be uploaded to the cloud server, by email; and if the email transmission menu is selected, displaying the data to an email server via email.

The method may further include: if a request for downloading of data stored in the cloud server is received, downloading the data to the image forming apparatus.

The method may further include: if the pre-stored cloud clients are updated through updating of a firmware, displaying cloud server information corresponding to the updated cloud clients.

The method may further include: if a plurality of account information are input through the account information UI window, automatically selecting a plurality of cloud clients corresponding to the plurality of account information from pre-stored cloud clients; transmitting the plurality of account information to the plurality of cloud servers by using a plurality of cloud server information corresponding to the plurality of selected cloud clients in order to log in the plurality of cloud servers; and communicating with the plurality of logged-in cloud servers.

The method may further include: if the selected menu is a menu which is to display data stored in the image forming apparatus and the cloud server, requesting a file list of the data stored in the cloud server; if the file list of the data stored in the cloud server is received according to the request, adding the received file list to a file list of the data stored in the image forming apparatus; and displaying the file list which includes the added file list.

According to an aspect of another embodiment, there is provided an image forming apparatus. The image forming apparatus may include: a user interface unit which, if a menu related to an access to a cloud server is selected, displays an account information UI window to input account information; a storage unit which stores cloud clients; a controller which automatically sects a cloud client corresponding to the input account information from the cloud clients stored in the storage unit and detects cloud server information corresponding to the selected cloud client; and a communication interface unit which transmits the account information to the cloud server by using the cloud server information to log in the cloud server and communicates with the logged-in cloud server.

The account information may include a user ID and server identification information. The controller may automatically select the cloud server according to the server identification information.

If the login is performed with respect to the cloud server, the controller may control the communication interface unit to request information about a free space available for a user in the cloud server and display the information about the free space, wherein the free space corresponds to the account information, and the information is received according to the request.

The controller may control the communication interface unit to upload scanned data or stored data to the cloud server according to a type of the selected menu.

The controller may control the communication interface unit to compare a file size of the scanned data or the stored data with the free space and, if the free space is greater than the file size of the scanned data or the stored data, upload the scanned data or the stored data to the cloud server.

The controller may control the user interface unit to request information about a free space available in the cloud server remaining after the scanned data or the stored data is uploaded to the cloud server and, if the information about the remaining free space is received through the communication interface unit according to the request, display the information about the remaining free space.

If the free space is smaller than the file size of the scanned data or the stored data or the free space is not enough when the scanned data or the stored data is being uploaded to the cloud server, the controller may control the communication interface unit to log out.

If the free space is smaller than the file size of the scanned data or the stored data or the free space is not enough when the scanned data or the stored data is being uploaded to the cloud server, the controller may control the user interface unit to display an email transmission menu which is to transmit data, which is to be uploaded to the cloud server, by email. If the email transmission menu is selected, the controller may control the communication interface unit to transmit the data to an email server via email.

If a request for downloading of data stored in the cloud server is received, the controller may control the communication interface unit to download the requested data to the image forming apparatus.

If the cloud clients stored in the storage unit is updated through updating of a firmware, the controller may control the user interface unit to display cloud server information corresponding to the updated cloud clients.

If a plurality of account information are input through the account information UI window, the controller may automatically select a plurality of cloud clients corresponding to the plurality of account information from the cloud clients stored in the storage unit. The communication interface unit may transmit the plurality of account information to the plurality of cloud clients by using a plurality of cloud server information corresponding to the plurality of selected cloud clients to log in the plurality of cloud servers and communicate with the plurality of logged-in cloud servers.

If the selected menu is a menu which is to display data stored in the image forming apparatus and the cloud server, the controller may control the user interface unit to request a file list of the data stored in the cloud server, if the file list of the data is received according to the request, add the received file list to a file list of the data stored in the storage unit, and display the file list which includes the added file list.

According to an aspect of another embodiment, there is provided a method of communicating with a cloud server in an image forming apparatus. The method may include: if a menu related to an access to the cloud server is selected, displaying an account information UI window; inputting account information through the account information UI window; accessing the cloud server by using cloud server information corresponding to the account information; and communicating with the cloud server.

According to an aspect of another embodiment, there is provided a computer-readable recording medium having embodied thereon a program code for executing a method of communicating with a cloud server in an image forming apparatus. The method may include: if a menu related to an access to the cloud server is selected, displaying an account information UI window; inputting account information through the account information UI window; automatically selecting a cloud client corresponding to the input account information from pre-stored cloud clients; transmitting the account information to the cloud server by using cloud server information corresponding to the selected cloud client to log in the cloud server; and communicating with the logged-in cloud server.

Additional aspects and advantages of the embodiments will be set forth in the detailed description, will be obvious from the detailed description, or may be learned by practicing the embodiments.

### BRIEF DESCRIPTION OF THE DRAWINGS

The above and/or other aspects will be more apparent by describing in detail embodiments, with reference to the accompanying drawings, in which:
FIG. 1 is a view illustrating a communication system between an image forming apparatus and a cloud server according to an embodiment;
FIG. 2 is a block diagram of an image forming apparatus according to an embodiment;
FIGS. 3 through 6 are views illustrating a user interface (UI) window for explaining a method of communicating with a cloud server in an image forming apparatus according to an embodiment;
FIGS. 7 through 12 are timing charts illustrating methods of communicating with a cloud server in an image forming apparatus, according to embodiments; and
FIG. 13 is a flowchart illustrating a method of communicating with a cloud server in an image forming apparatus, according to an embodiment.

### DETAILED DESCRIPTION

Reference will now be made in detail to embodiments, examples of which are illustrated in the accompanying drawings, wherein like reference numerals refer to the like elements throughout. Embodiments are described below to explain by referring to the figures.

Hereinafter, embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of embodiments. Thus, it is apparent that embodiments can be carried out without those specifically defined matters. Also, functions or elements known in the related art are not described in detail since they would obscure the embodiments with unnecessary detail.

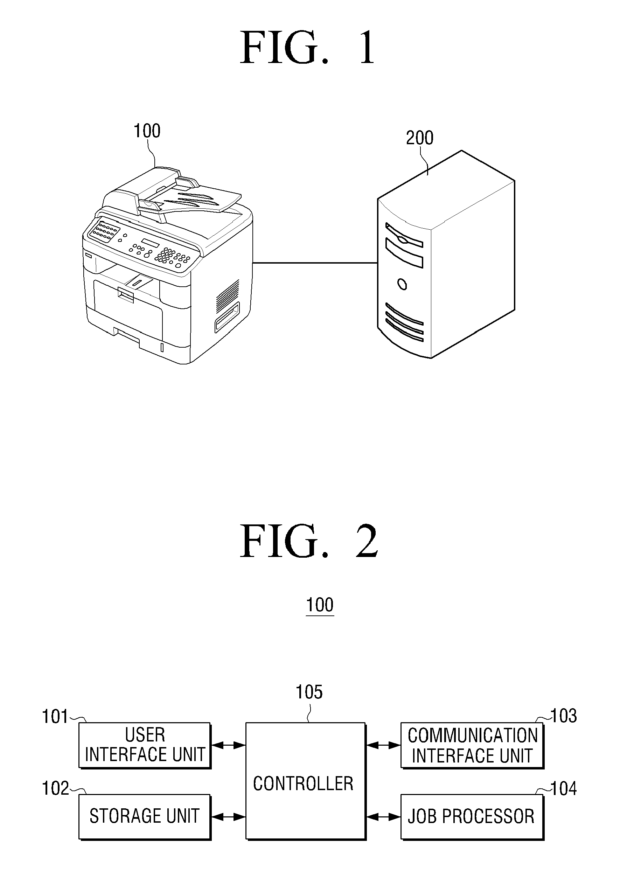

FIG. 1 is a view illustrating a communication system between an image forming apparatus and a cloud server according to an embodiment. Referring to FIG. 1, the communication system includes an image forming apparatus 100 and a cloud server 200.

The image forming apparatus 100 refers to an apparatus which prints printing data generated by a terminal apparatus such as a computer on a recording paper. Examples of the image forming apparatus 100 include a copier, a printer, a fax machine, and a multifunction peripheral (MFP) which may perform functions of copying, printing and faxing through one device, etc.

The cloud server 200 refers to a server which provides a cloud service. Here, the cloud service refers to a computing service by which a user purchases and borrows computing resources, such as intangible hardware, software, etc..

The communication system including the image forming apparatus 100 and the cloud server 200 according to embodiment does not require a user terminal apparatus, such as a personal computer (PC), in order to upload data generated by the image forming apparatus 100 to the cloud server 200.

In detail, the image forming apparatus 100 uses account information input from the user to automatically select a cloud client corresponding to the input account information from cloud clients stored in a storage unit. If the cloud client is selected, the image forming apparatus 100 detects cloud server information corresponding to the selected cloud client from the selected cloud client and transmits the account information to the cloud server 200 by using the detected cloud server information in order to log in the cloud server 200. If the image forming apparatus 100 logs in the cloud server 200, the image forming apparatus 100 communicates with the cloud server 200.

In other words, the image forming apparatus 200 analyzes the input account information to automatically select the cloud client corresponding to the input account information from the cloud clients stored in the storage unit of the image forming apparatus 100. Therefore, the image forming apparatus 100 may directly upload data, which is stored in the image forming apparatus 100 or generated by the image forming apparatus 100, to the cloud server 200 without a user terminal apparatus such as a PC. Hereinafter, the image forming apparatus 100 and a method of communicating with the cloud server 200 in the image forming apparatus 100 according to embodiments will be described in detail with reference to FIGS. 2 through 13.

FIG. 2 is a block diagram of the image forming apparatus 100, according to an embodiment. Referring to FIG. 2, the image forming apparatus 100 includes a user interface unit 101, a storage unit 102, a communication interface unit 103, a job processor 104, and a controller 105.

The user interface unit 101 is used by a user to set or select various functions supported by the image forming apparatus 100.

In detail, the user interface unit 101 may display a user interface (UI) window through which the user sets or selects the various functions supported by the image forming apparatus 100.

Here, the UI window may include menus related to jobs which are to be processed by the job processor 104, e.g., copy, fax, scan, and print menus, etc.

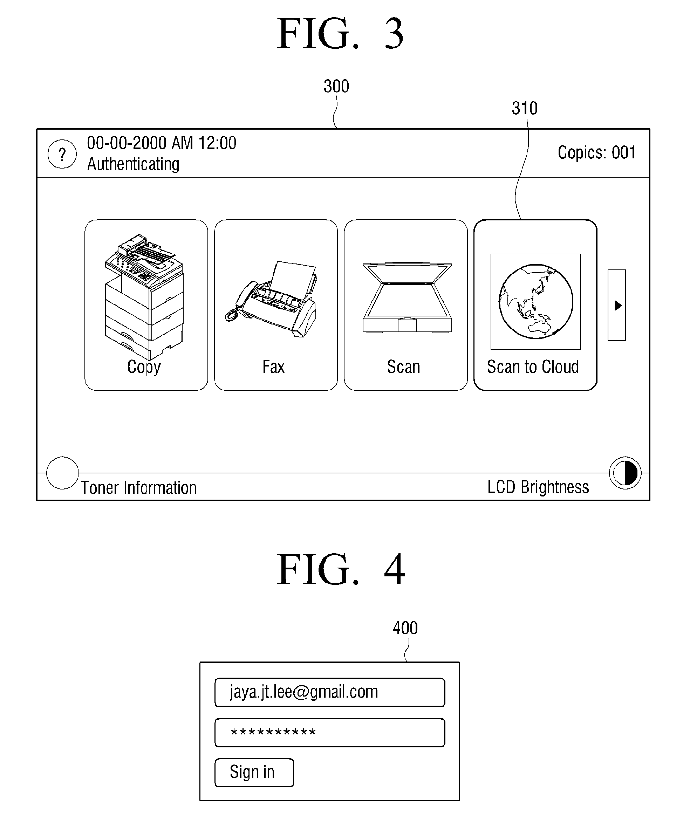

The UI window may further include a menu related to an access to the cloud server 200. Here, the menu related to the access to the cloud server 200 refers to a menu which is to operate along with a cloud server 200. Examples of the menu may include a scan-to-cloud menu, a box-to-cloud menu, and a document menu. The scan-to-cloud menu is to perform scanning and uploading scanned data to the cloud server 200. The box-to-cloud menu is to upload data stored in the storage unit 102 of the image forming apparatus 100 to the cloud server 200. The document box menu is to display data stored in the image forming apparatus 100 and the cloud server 200. This will be described later with reference to FIG. 3.

If the menu related to the access to the cloud server 200 is selected on the UI window, the user interface unit 101 may display an account information UI window to input account information. In other words, account information is to be input in order to access the cloud server 200. Therefore, if the menu related to the access to the cloud server 200 is selected on the UI window, the user interface unit 101 may display the account information UI window.

Here, the account information may include a user identification (ID), a password, and server identification information which are necessary for accessing the cloud server 200. For example, if "jaya.jt.lee@gmail.com" is input on the account information UI window, "jaya.jt.lee" is defined as the user ID, and "gmail.com" is defined as the server identification information. This will be described later with reference to FIG. 4.

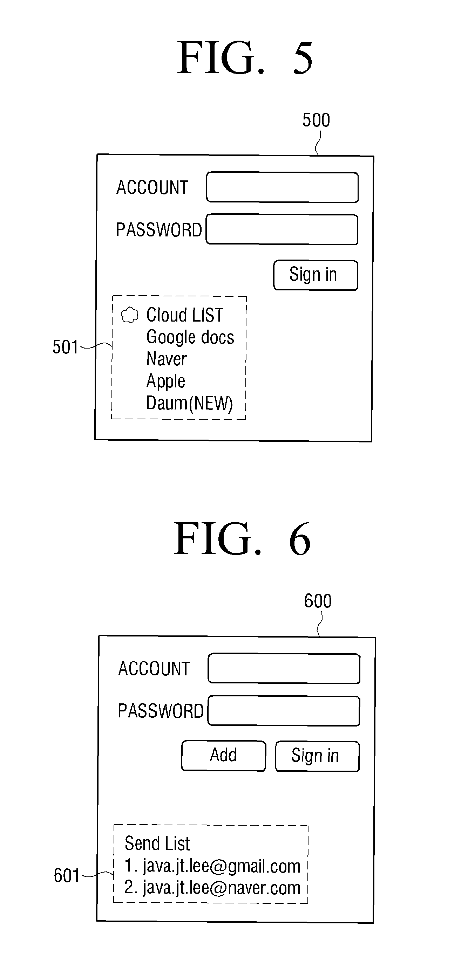

If a cloud client stored in the storage unit 102 is updated by updating a firmware, the user interface unit 101 may display cloud server information corresponding to the updated cloud client. In other words, if a new cloud service appears through updating of a firmware, the user interface unit 101 may display a newly added cloud service on the UI window so that the user recognizes the newly added cloud service. This will be described later with reference to FIG. 5.

The user interface unit 101 may display the account information UI window which includes a UI window through which a plurality of account information. In other words, if the user wants to communicate with a plurality of cloud servers 200 at a time, the user interface unit 101 may display a UI window through which a plurality of account information are input, to communicate with the plurality of cloud servers 200 at a time. This will be described later with reference to FIG. 6.

Here, the user interface unit 101 may be realized as a unit through which an input and an output are simultaneously realized like a touch pad or the like. The user interface unit 101 may also be realized as a combination of an input unit, such as a control key, a mouse, a keyboard, or the like, and a display unit, such as a cathode-ray tube (CRT) monitor, a liquid crystal display (LCD) monitor, a light-emitting diode (LED), or the like.

The storage unit 102 stores various types of programs and data necessary for operating the image forming apparatus 100.

In detail, the storage unit 102 may store a cloud client. Here, the cloud client refers to a module which enables an access to the cloud server 200 by using an open application programming interface (API) provided by a cloud service provider such as Google, Apple, Naver, Daum, or the like. Here, open APIs provided by cloud service providers are different from one other, and thus methods of accessing the cloud servers 200 are different from one another. Therefore, the storage unit 102 may store at least one cloud client related to the methods of accessing the cloud servers 200 to enable accesses to the cloud servers 200.

The storage unit 102 may update a firmware to update the stored cloud client. In other words, the storage unit 102 may update the firmware to store a new cloud client.

The storage unit 102 may store data, which is to be stored for a fixed period like a secure job or a scheduled job, and data such as a document. Here, if the box-to-cloud menu is selected on the UI window displayed through the user interface unit 101, data stored in the storage unit 102 of the image forming apparatus 100 may be uploaded to the cloud server 200.

Here, the storage unit 102 may be an embedded storage device, such as a random access memory (RAM), a flash memory, a read only memory (ROM), an erasable programmable ROM (EPROM), an electronically erasable and programmable ROM (EEPROM), a register, a hard disk, a removable disk, or a memory card. Alternatively, the storage unit 102 may be a removable storage device such as a universal serial bus (USB) memory.

The communication interface unit 103 connects the image forming apparatus 100 to the cloud server 200.

In detail, the communication interface unit 103 may transmit account information to the cloud server 200 by using server information detected by the controller 105 to log in the cloud server 200.

If the login is performed with respect to the cloud server 200, the communication interface unit 103 may communicate with the logged-in cloud server 200 (e.g., may upload or download data).

Here, the communication interface unit 103 may access the cloud server 200 through a local area network (LAN) or the Internet in a wire or wireless way or may access the cloud server 200 through a USB port.

The job processor 140 performs an image forming job, such as printing, scanning, faxing, or the like, according to a control signal of the controller 150 which will be described later.

The controller 150 controls the user interface unit 101, the storage unit 102, the communication interface unit 103, and the job processor 104.

In detail, the controller 150 may automatically select the cloud client corresponding to the account information input through the user interface unit 101 from the cloud clients stored in the storage unit 102. In other words, the storage unit 102 stores cloud clients which are access modules of client providers (e.g., Google, Naver, etc.). Therefore, the controller 150 may automatically select a cloud client corresponding to the account information by using the input account information.

Here, the controller 105 may automatically select a cloud client according to the server identification information included in the account information. For example, if "jaya.jt.lee@gmail.com" is input on the account information UI window, the controller 105 may use server identification information "gmail.com" to check that a cloud server that the user wants to access, is Google and may automatically select a cloud client related to the access to Google.

If the cloud client corresponding to the input account information is automatically selected, the controller 105 may detect cloud server information from the selected cloud client. In other words, if the cloud client related to the access to Google is selected, the controller 105 may detect cloud server information indicating that the selected cloud server 200 is Google.

The controller 105 may control the communication interface unit 103 to transmit the account information, which is input through the user interface unit 101 for the login, to the selected cloud server 200 corresponding to the detected cloud server information.

If the login is performed with respect to the cloud server 200, the controller 105 may control the user interface unit 101 to request information about a free space available for the user in the cloud server 200 and display the information about the free space, wherein the free space corresponds to the account information, and the information about the free space is received according to the request. In other words, if the login is performed with respect to the cloud server 200, the image forming apparatus 100 may display the information about the free space available in the cloud server 200 (i.e., the free space available for the user in the cloud server 200, wherein the free space corresponds to account information). As a result, the user may determine an amount of data to be updated.

If the login is performed with respect to the cloud server 200, the controller 105 may control the communication interface unit 103 to upload scanned data or stored data to the cloud server 200 according to a type of a selected menu. In other words, if the scan-to-cloud menu is selected through the user interface unit 101, the controller 105 may control the communication interface unit 103 to upload the scanned data to the cloud server 200. If the box-to-cloud menu is selected, the controller 105 may control the communication interface unit 103 to upload data stored in the storage unit 105 to the cloud server 200.

The controller 105 may control the communication interface unit 103 to compare a file size of the scanned data or the stored data with the free space available in the cloud server 200 and upload the scanned data or the stored data if the free space is greater than the file size of the scanned data or the stored data. In other words, if the scan-to-cloud menu is selected through the use interface unit 101, the controller 105 may control the communication interface unit 103 to compare the file size (e.g., 100 KB) of the scanned data with the free space available for the user in the cloud server 200, wherein the free space corresponds to the account information, and upload the scanned data to the cloud server 200 if the free space available in the cloud server 200 is greater than the file size of the scanned data.

Also, the controller 105 may control the user interface unit 101 to request information about a free space available in the cloud server 200 remaining after data is uploaded to the cloud server 200 and display the information about the remaining free space available in the cloud server 200 if the information about the remaining free space available in the cloud server 200 is received through the communication interface unit 103 according to the request. In other words, if the scanned data or the stored data is completely uploaded to the cloud server 200, the controller 105 displays the information about the free space available in the cloud server 200 remaining after the scanned data or the stored data is uploaded to the cloud server 200. Therefore, the user may check a current free space.

The controller 105 may control the communication interface unit 103 to compare the file size of the scanned data or the stored data with the free space available in the cloud server 200 and log out if the free space is smaller than the file size of the scanned data or the stored data. In other words, if the scan-to-cloud menu is selected through the user interface unit 101, the controller 105 may control the communication interface unit 103 to compare the file size (e.g., 100 KB) of the scanned data with a free space available for the user in the cloud server 200, wherein the free space corresponds to account information, and not to upload the scanned data to the cloud server 200 but to log out if the free space is smaller than the file size of the scanned data. In other words, if a free space available in the cloud server 200 is not enough when the scanned data or the stored data is being uploaded to the cloud server 200, the controller 105 may control the communication interface unit 103 to log out. If the user does not recognize that the free space available in the cloud server 200 is not enough and uploads the scanned data or the stored data to the cloud server 200, a free space may disappear from the cloud server 200 when the scanned data or the stored data is being uploaded to the cloud server 200. In this case, the controller 105 may control the communication interface unit 103 to stop uploading and log out.

The controller 105 may control the user interface unit 101 to compare the file size of the scanned data or the stored data with the free space available in the cloud server 200 and, if the free space is smaller than the file size of the scanned data or the stored data, display an e-mail transmission menu (a scan-to-email menu or a box-to-email menu) which is to transmit data to be uploaded to the cloud server 200, by email. If the email transmission menu displayed through the user interface unit 101 is selected, the controller 105 may control the communication interface unit 103 to transmit the data to an email server via email. In other words, if the scan-to-cloud menu is selected through the user interface unit 101, the controller 105 may control the communication interface unit 103 to compare the file size (e.g., 100 KB) of the scanned data with the free space available for the user in the cloud server 200, wherein the free space corresponds to the account information, and, if the free space available in the cloud server 200 is smaller than the file size of the scanned data, transmit the scanned data to a corresponding email server by using server information and an ID of the account information.

If the free space available in the cloud server 200 is not enough when the scanned data to the stored data is being uploaded to the cloud server 200, the controller 105 may control the user interface unit 101 to display the email transmission menu (the scan-to-email menu or the box-to-email menu) which is to transmit data to be uploaded to the cloud server 200, by email. If the email transmission menu displayed through the user interface unit 101 is selected, the controller 105 may control the communication interface unit 103 to transmit the data to the email server via email.

However, the present inventive concept is not limited thereto. Therefore, if a free space is not enough, the controller 105 may control the communication interface unit 103 to re-display a UI window which is to receive an email and transmit data to an input email server.

If a request for downloading of data stored in the cloud server 200 is received, the controller 105 may control the communication interface unit 103 to download the requested data to the image forming apparatus 100. In other words, the user may download data, which is uploaded to the cloud server 200 to be stored in the cloud server 200, to the image forming apparatus 100 in order to use the data in the image forming apparatus 100. In this case, the image forming apparatus 100 may perform a printing job or a faxing job with respect to the downloaded data.

If the cloud client stored in the storage unit 102 is updated through updating of the firmware, the controller 105 may control the user interface unit 101 to display information of the cloud server 200 corresponding to the updated cloud client. In other words, the controller 105 may control the communication interface unit 103 to upload the cloud client to the cloud server 200. Also, if the box-to-cloud menu is selected, the controller 105 may control the communication interface unit 103 to upload the data stored in the storage unit 102 to the cloud server 200. In other words, if a new cloud service appears through updating of the firmware, the user interface unit 101 may display which cloud service has been newly added to the UI window so that the user recognizes the newly added cloud service.

If a plurality of account information are input through the user interface unit 101, the controller 105 may control to automatically select a plurality of cloud clients corresponding to the plurality of account information from cloud clients stored in the storage unit 102. In other words, if the user wants to communicate with a plurality of cloud servers 200 at a time, the controller 105 may automatically select the plurality of cloud clients corresponding to the plurality of account information to communicate with the plurality of cloud servers 200 at a time.

If the document box menu is selected through the user interface unit 101, the controller 105 may control the user interface unit 101 to request a file list of data stored in the cloud server 200, adds the file list of the data stored in the cloud server 200 to a file list of data stored in the storage unit 102 to if the file list of the data stored in the cloud server 200 is received according to the request, and display the file list which includes the added file lists. In other words, the user may be provided with a file list stored in the cloud server 200 and/or the image forming apparatus 100 so that the user may select the document box menu to select a file to be printed from the file list in order to immediately perform a desired job.

FIGS. 3 through 6 are views illustrating a UI window for explaining a method of communicating with a cloud server in an image forming apparatus according to an embodiment.

Referring to FIG. 3, a UI window 300 includes menus (copy, fax, and scan menus) related to jobs to be processed by the job processor 104 and a scan-to-cloud menu 310 related to an access to the cloud server 200. The UI window 300 may further include a box-to-cloud menu and an email-to-cloud menu.

A user may select a desired menu on the UI window 300, and the image forming apparatus 100 may execute the menu selected by the user. If the user selects the scan-to-cloud menu or the box-to-cloud menu, an account information UI window 400 as shown in FIG. 4 may be displayed.

Referring to FIG. 4, the account information UI window 400 may receive a user ID, a password, and server identification information necessary for accessing the cloud server 200. Here, the user ID may be "jaya.jt.lee," and the server identification information may be "gmail.com." The user may input the user ID, the password, and the server identification information and select "Sign in" to input account information which is to log in the cloud server 200.

FIG. 5 is a view illustrating a UI window 500 which displays cloud server information corresponding to a cloud client which is stored in the storage unit 102 and updated through updating of a firmware Referring to FIG. 5, a new cloud service (Daum) is added to a list 501 of cloud services (Google, Naver, and Apple) through updating of the firmware. A preset mark is displayed on the left of the list 501 to indicate that the new cloud service has been added. As described above, a new cloud service list may be displayed so that a user easily recognizes that a new cloud service has been added.

FIG. 6 is a view illustrating a UI window 600 through which a plurality of account information are input. Referring to FIG. 6, a user may select "ADD" of the UI window 600 to input a plurality of account information. In other words, in FIG. 6, the user inputs a plurality of account information in order to use cloud services "Google" and "Naver." A transmission list UI window 601 displays a list of cloud services with which the user communicates. The user may use the UI window 600 to communicate with a plurality of cloud servers 200 at a time. In other words, the user logs in the cloud services "Google" and "Naver" to communicate with cloud servers "Google" and "Naver" at a time.

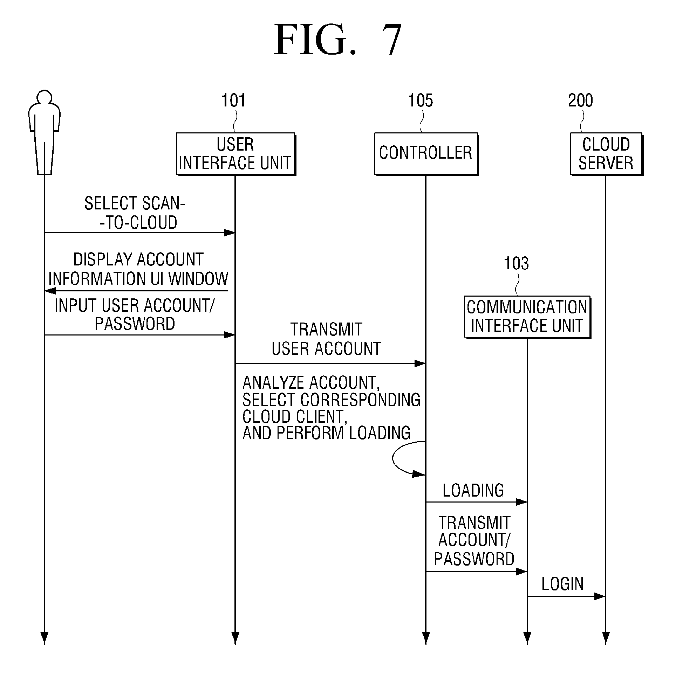

FIG. 7 is a timing chart illustrating a method of logging in a cloud server in an image forming apparatus according to an embodiment. Referring to FIG. 7, a user selects a scan-to-cloud menu from menus related to an access to the cloud server 200 on a menu selection UI window displayed through the user interface unit 101. If the scan-to-cloud menu is selected, the user interface unit 101 displays an account information UI window through which account information is to be input. If the account information is input through the account information UI window, the controller 105 analyzes the input account information to automatically select a cloud client corresponding to the input account information. The controller 105 detects cloud server information from the selected cloud client and transmits the account information to the communication interface unit 103 to transmit the input account information to the cloud server 200 corresponding to the detected cloud server information. The communication interface unit 103 transmits the account information to the cloud server 200 to log in the cloud server 200.

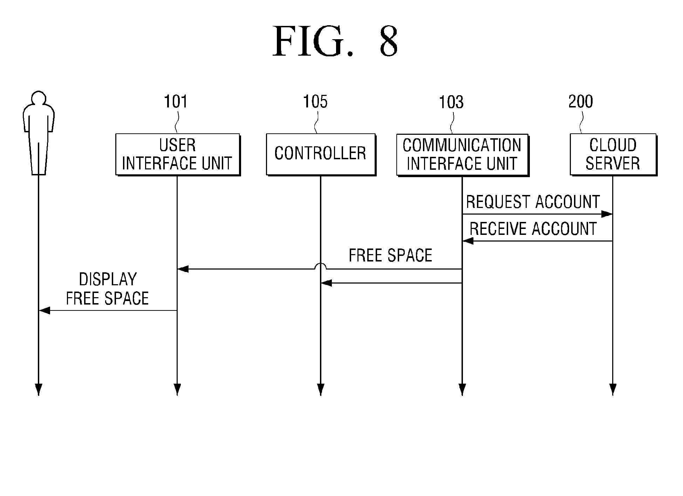

FIG. 8 is a timing chart illustrating a method of requesting and displaying a free space available for a user in the cloud server 200, wherein the free space corresponds to account information, if a login is performed with respect to the cloud server 200. Referring to FIG. 8, if the login is performed with respect to the cloud server 200, the communication interface unit 103 requests information about the free space available for the user in the cloud server 200 under control of the controller 105. The communication interface unit 103 receives the information about the free space in the cloud server 200 according to the request and transmits the information to the controller 105 and the user interface unit 101. The user interface unit 101 displays the information about the free space in the cloud server 200.

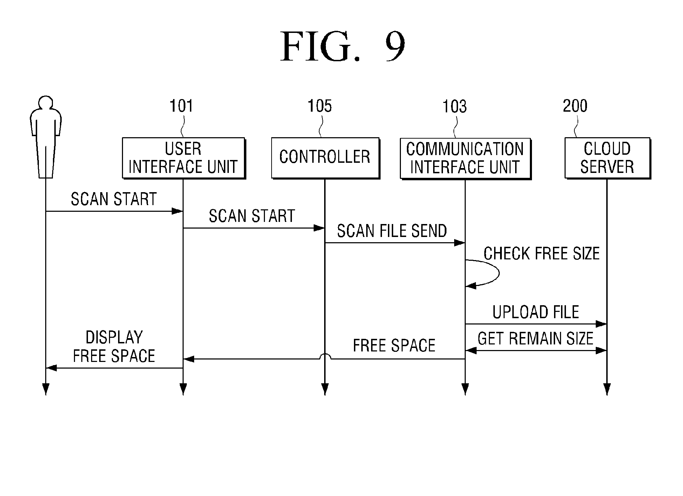

FIG. 9 is a timing chart illustrating a method of requesting and displaying information about a free space available in the cloud server 200 remaining after data is uploaded to the cloud server 200. Referring to FIG. 9, if a user selects a scan-to-cloud menu, the image forming apparatus 100 performs a scanning job and uploads scanned data to the cloud server 200 through the communication interface unit 103. If the scanned data is completely uploaded to the cloud server 200, the controller 105 requests information about a free space available in the cloud server 200 remaining after the scanned data is uploaded to the cloud server 200 and receives the information through the communication interface unit 103 according to the request. The communication interface unit 103 transmits the information about the remaining free space available in the cloud server 200 to the user interface unit 101, and the user interface unit 101 displays the information.

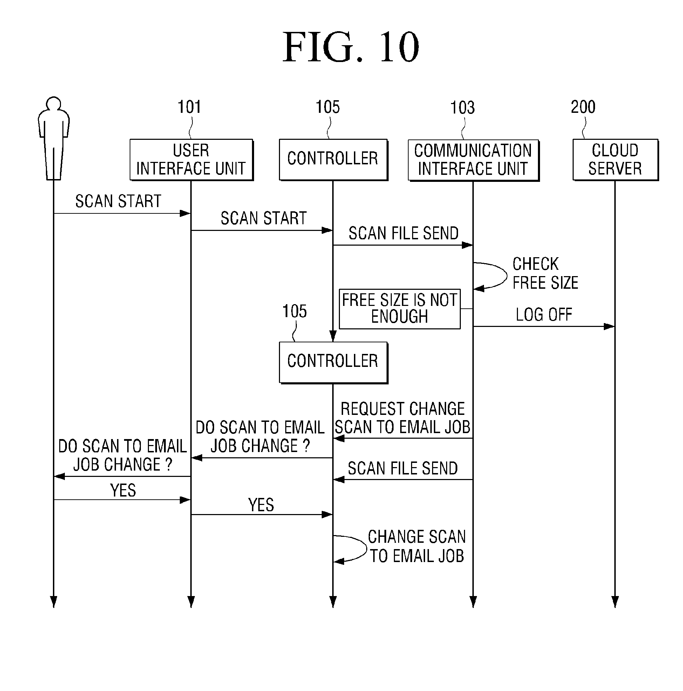

FIG. 10 is a timing chart illustrating a method of logging off and displaying a scan-to-email menu if a free space available in the cloud server 200 is not enough. Referring to FIG. 10, if a user selects a scan-to-cloud menu, the image forming apparatus 100 performs a scanning job, and the controller 105 compares a file size of scanned data with the free space available in the cloud server 200. If the free space is smaller than the file size of the scanned data, the controller 105 controls the communication interface unit 103 to log out. The controller 105 controls the user interface unit 101 to display an email transmission menu (a scan-to-email menu or a box-to-email menu) which is to transmit data to be uploaded to the cloud server 200, by email. If the email transmission menu displayed through the user interface unit 101 is selected, the controller 105 controls the communication interface unit 103 to transmit the data to an email server via email.

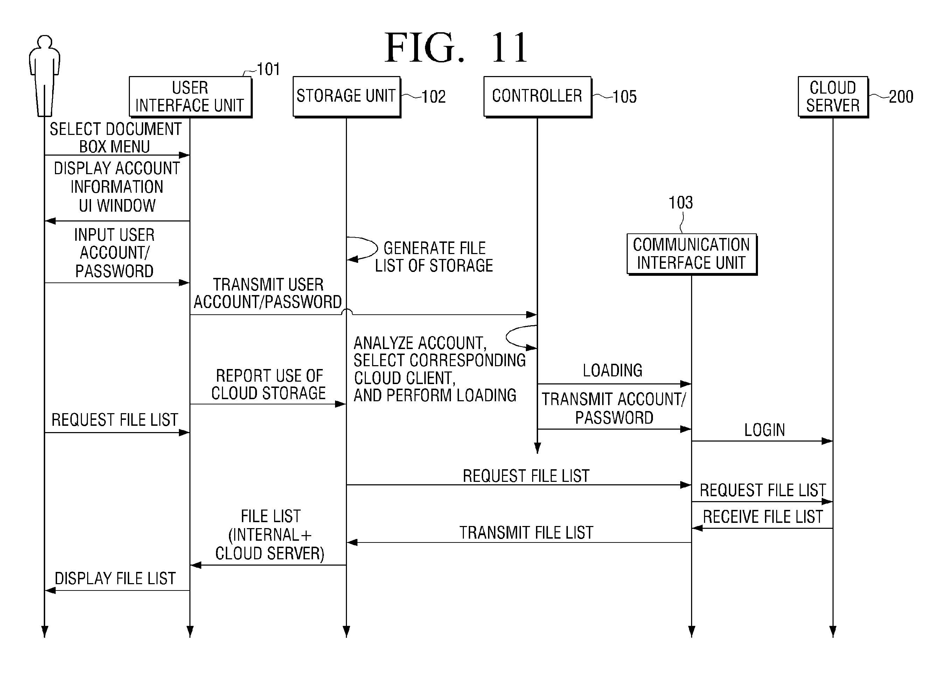

FIG. 11 is a timing chart illustrating a method of displaying a file list of data stored in the image forming apparatus 100 and the cloud server 200. Referring to FIG. 11, a user selects a document box menu on a menu selection UI window displayed through the user interface unit 101 from menus related to an access to the cloud server 200. If the document box menu is selected, the user interface unit 101 displays an account information UI window through which account information is to be input. The controller 105 generates a file list of data stored in the storage unit 102. If the account information is input through the account information UI window, the controller 105 analyzes the input account information to automatically select a cloud client corresponding to the input account information. The controller 105 detects cloud server information from the selected cloud client and transmits the account information to the communication interface unit 103 so as to transmit the input account information to the cloud server 200 corresponding to the detected cloud server information. The communication interface unit 103 requests a file list of data stored in the cloud server 200 under control of the controller 105. The communication interface unit 103 receives the file list of the data stored in the cloud server 200 according to the request and transmits the file list to the controller 105. The controller 105 adds the transmitted file list to a file list of data stored in the storage unit 102 of the image forming apparatus 100 and displays the file list which includes the added file list through the user interface unit 101.

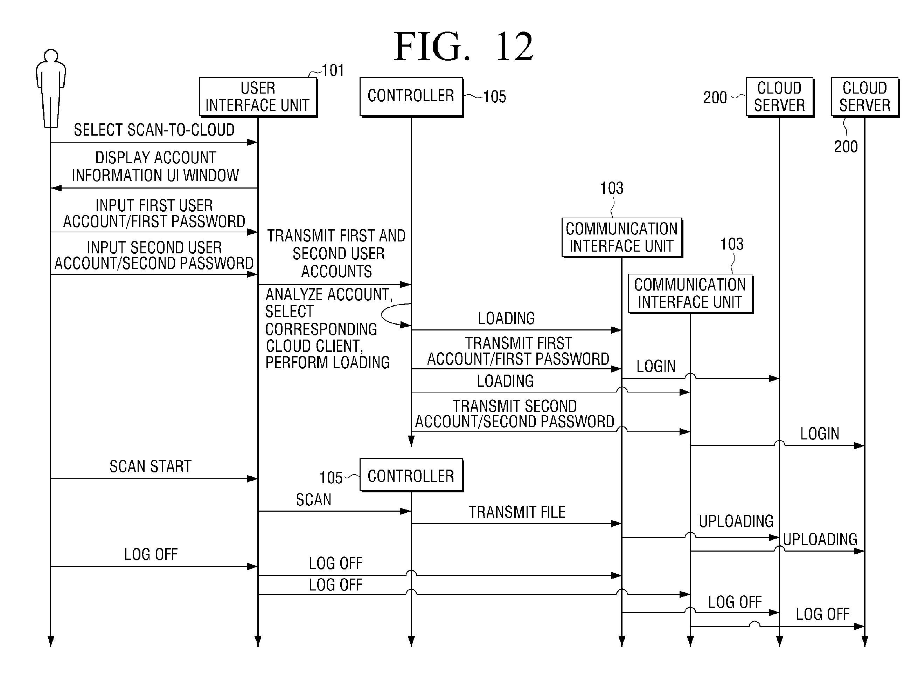

FIG. 12 is a timing chart illustrating a method of inputting a plurality of account information through the user interface unit 101. First and second account information are input from a user through the user interface unit 101. The controller 105 automatically selects cloud clients respectively corresponding to first and second account information from cloud clients stored in the storage unit 102. The controller 105 also detects cloud server information from the selected cloud clients and transmits the first and second account information to the communication interface unit 103 so as to transmit the first and second account information to cloud servers 200 corresponding to the detected cloud server information. The communication interface unit 103 respectively transmits the first and second account information to the cloud servers 200 in order to log in the cloud servers 200, respectively. The controller 105 communicates with the cloud servers 200 which are logged in through the communication interface unit 103.

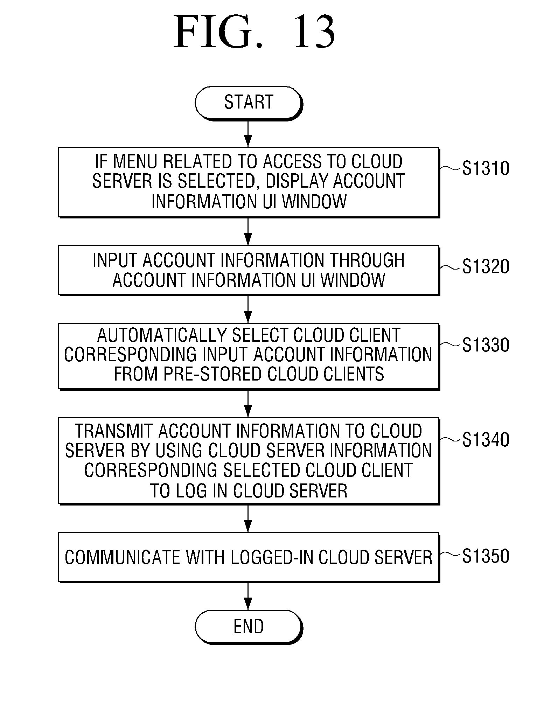

FIG. 13 is flowchart illustrating a method of communicating a cloud server in an image forming apparatus according to an embodiment. If a menu (a scan-to-cloud menu or a box-to-cloud server) related to an access to a cloud server is selected, an account information UI window is displayed in operation S1310. In operation S1320, account information is input through the account information UI window. In operation S1330, a cloud client corresponding to the input account information is automatically selected from pre-stored cloud clients. Here, the cloud client may be automatically selected according to server identification information included in the account information. For example, if "jaya.jt.lee@gmail.com" is input on the account information UI window, Google may be checked as a cloud server that a user wants to access by using server identification information "gmail.com," and a cloud client related to an access to the cloud server "Google" may be automatically selected. In operation S1340, the account information is transmitted to the cloud server by using the cloud server information corresponding to the selected cloud client to log in the cloud server. In operation S1350, a communication is performed with the logged-in cloud server.

As described above, according to various embodiments, data generated by an image forming apparatus may be directly uploaded to a cloud server without passing through a user terminal apparatus. Therefore, an inconvenience of a user of performing a complicated process in the image forming apparatus to log in the cloud server may be mitigated.

Also, various types of cloud clients may be integrated into one so that the user automatically logs in the various types of cloud servers. Therefore, the user may easily log in a desired cloud server.

A method of communicating with a cloud server in an image forming apparatus according to various embodiments may also be embodied as a program code on various types of recording media. In detail, the program code may be stored on various types of computer-readable recording media including a random access memory (RAM), a flash memory, a read only memory (ROM), an erasable programmable ROM (EPROM), an electronically erasable and programmable ROM (EEPROM), a register, a hard disk, a removable disk, a memory card, a USB memory, a compact disk-ROM (CD-ROM), etc.

Therefore, a program may be installed to execute the method in an apparatus to which or in which the computer-readable recording media are connected or installed.

The foregoing embodiments and advantages are merely and are not to be construed as limiting the present inventive concept. The embodiments can be readily applied to other types of apparatuses. Also, the description of the embodiments is intended to be illustrative, and not to limit the scope of the claims, and many alternatives, modifications, and variations will be apparent to those skilled in the art.

Although some embodiments have been shown and described, it would be appreciated by those skilled in the art that changes may be made in embodiments without departing from the principles, the scope of which is defined in claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of communicating with a cloud server in an image forming apparatus, the method comprising:
if a menu related to an access to the cloud server is selected, displaying an account information user interface (UI) window;
inputting account information through the account information UI window;
automatically selecting a cloud client corresponding to the input account information from pre-stored cloud clients;
transmitting the account information to the cloud server by using cloud server information corresponding to the selected cloud client to log in the cloud server; and
communicating with the logged-in cloud server.

2. The method as claimed in claim 1, wherein:
the account information comprises a user identification (ID) and server identification information; and
the cloud client is automatically selected according to the server identification information.

3. The method as claimed in claim 1, further comprising:
if the login is performed with respect to the cloud server, requesting information about a free space available for a user in the cloud server, wherein the free space corresponds to the account information; and
displaying the information about the free space according to the request.

4. The method as claimed in claim 3, further comprising:
uploading scanned data or stored data to the cloud server according to a type of the selected menu.

5. The method as claimed in claim 4, wherein the uploading of the scanned data or the stored data comprises:
comparing a file size of the scanned data or the stored data with the free space; and
if the free space is greater than the file size of the scanned data or the stored data, uploading the scanned data or the stored data to the cloud server.

6. The method as claimed in claim 5, further comprising:
if the scanned data or the stored data is uploaded to the cloud server, requesting information about a free space available in the cloud server remaining after the scanned data or the stored data is uploaded to the cloud server; and
if the information about the remaining free space available in the cloud server is received according to the request, displaying the information about the remaining free space available in the cloud server.

7. The method as claimed in claim 5, further comprising:
if the free space is smaller than the file size of the scanned data or the stored data or the free space is not enough when the scanned data or the stored data is being uploaded to the cloud server, logging out.

8. The method as claimed in claim 5, further comprising:
if the free space is smaller than the file size of the scanned data or the stored data or the free space is not enough when the scanned data or the stored data is being uploaded to the cloud server, displaying an email transmission menu which is to transmit data, which is to be uploaded to the cloud server, by email; and
if the email transmission menu is selected, displaying the data to an email server in an email way.

9. The method as claimed in claim 1, further comprising:
if a request for downloading of data stored in the cloud server is received, downloading the data to the image forming apparatus.

10. The method as claimed in claim 1, further comprising:
if the pre-stored cloud clients are updated through updating of a firmware, displaying cloud server information corresponding to the updated cloud clients.

11. The method as claimed in claim 1, further comprising:
if a plurality of account information are input through the account information UI window, automatically selecting a plurality of cloud clients corresponding to the plurality of account information from pre-stored cloud clients;
transmitting the plurality of account information to the plurality of cloud servers by using a plurality of cloud server information corresponding to the plurality of selected cloud clients in order to log in the plurality of cloud servers; and
communicating with the plurality of logged-in cloud servers.

12. The method as claimed in claim 1, further comprising:
if the selected menu is a menu which is to display data stored in the image forming apparatus and the cloud server, requesting a file list of the data stored in the cloud server;
if the file list of the data stored in the cloud server is received according to the request, adding the received file list to a file list of the data stored in the image forming apparatus; and
displaying the file list which includes the added file list.

13. An image forming apparatus comprising:
a user interface unit which, if a menu related to an access to a cloud server is selected, displays an account information UI window to input account information;
a storage unit which stores cloud clients;
a controller which automatically selects a cloud client corresponding to the input account information from the cloud clients stored in the storage unit and detects cloud server information corresponding to the selected cloud client from the selected cloud client; and
a communication interface unit which transmits the account information to the cloud server by using the cloud server information to log in the cloud server and communicates with the logged-in cloud server.

14. The image forming apparatus as claimed in claim 13, wherein if the login is performed with respect to the cloud server, the controller controls the communication interface unit to request information about a free space available for a user in the cloud server and display the information about the free space, wherein the free space corresponds to the account information, and the information is received according to the request.

15. The image forming apparatus as claimed in claim 14, wherein the controller controls the communication interface unit to upload scanned data or stored data to the cloud server according to a type of the selected menu.
